# EUROPEAN PATENT APPLICATION

(11) **EP 4 787 784 A1**
(43) Date of publication of application: **05.08.2026**
(21) Application number: 24907810.6
(22) Date of filing: 19.11.2024
(51) Int. Cl.: H04L 12/28, G06F 1/32, G06Q 50/10, G16Y 40/30, G16Y 20/30

(54) **APPARATUS FOR ENERGY SERVICE OF USER TERMINAL, AND METHOD FOR ENERGY SERVICE THEREOF**

(30) Priority: 19.12.2023 KR 20230186400
(71) Applicant: Samsung Electronics Co., Ltd., Suwon-si, Gyeonggi-do 16677 (KR)
(72) Inventor: SHIN, Hyesun, Suwon-si, Gyeonggi-do 16677 (KR)
(74) Representative: Gulde & Partner
(86) International application number: PCT/KR2024/018207
(87) International publication number: WO 2025/135525

(57) **Abstract**

A energy service apparatus of a user terminal and an energy service method thereof are provided. The energy service apparatus may include: a processor configured to: request, from a first server, first information associated with a device providing an energy service from among a plurality of devices connected via a smart home network to determine whether a target device, selected through a user interface of a user terminal from the plurality of devices, provides the energy service, based on information associated with the target device not being included in the first information received from the first server, request second information about the plurality of devices connected via the smart home network from a second server, and determine whether the target device is the device providing the energy service by cross-checking the second information received from the second server and information of a management file stored in a third server; and memory configured to store information associated with at least one of the plurality of devices connected via the smart home network or the device providing the energy service, wherein the energy service provides information related to at least one of a power-saving mode or power consumption of the device connected via the smart home network, and the management file may include information associated with the device that provides the energy service and that is registered by an administrator through an input interface.

## Description

### [Technical Field]

The disclosure relates to an energy service apparatus of a user terminal, and an energy service method thereof.

### [Background Art]

An energy service provides information associated with at least one of a power-saving mode or power consumption of a device connected via a smart home network to an energy service screen of a user terminal.

Through the energy service, a user may monitor, in real time, information associated with the power-saving mode and power consumption of digital appliances and Internet of Things (IoT) devices connected via the smart home network.

However, a device for providing information associated with the power consumption and the power-saving mode may fail to display information associated with the device on the energy service screen.

In this case, the user is required to contact a service team after registering on a service website. The service team is required to verify the user account and digital device information through multiple processes and respond to the user, which takes a considerable amount of time. Accordingly, the energy service may not be efficiently provided due to the complexity of the verification process.

### [Disclosure]

### [Technical Problem]

An aspect of the disclosure provides an energy service apparatus of a user terminal that may allow a user to easily confirm whether a device selected by the user is a device providing an energy service in order to efficiently provide the energy service, and an energy service method thereof.

### [Technical Solution]

According to an aspect of the disclosure, an energy service apparatus may include: a processor configured to: request, from a first server, first information associated with a device providing an energy service from among a plurality of devices connected via a smart home network to determine whether a target device, selected through a user interface of a user terminal from the plurality of devices, provides the energy service, based on information associated with the target device not being included in the first information received from the first server, request second information associated with the plurality of devices connected via the smart home network from a second server, and determine whether the target device is the device providing the energy service by cross-checking the second information received from the second server and information of a management file stored in a third server; and memory configured to store information associated with at least one of the plurality of devices connected via the smart home network or the device providing the energy service, wherein the energy service may provide information related to at least one of a power-saving mode or power consumption of the device connected via the smart home network, and the management file may include information associated with the device that provides the energy service and that is registered by an administrator through an input interface.

Based on the information associated with the target device being included in the first information received from the first server, the processor may be configured to determine whether the target device provides information related to at least one of the power-saving mode or the power consumption based on the first information, the first information may include a first setting value indicating whether the target device is a device providing information related to the power consumption, and the processor may be configured to confirm the first setting value of the target device using a device identifier (device ID) of the target device included in the first information, and determine whether the target device is the device providing the information related to the power consumption based on the first setting value.

The first information may further include mode information indicating whether the target device is a device providing information related to the power-saving mode, and based on determining that the target device is the device providing the information related to the power consumption based on the first setting value, the processor may be configured to determine whether the target device is the device providing the information related to the power-saving mode based on the mode information.

The first information may include a second setting value indicating whether the target device is excluded from devices providing the information related to the power-saving mode as an exception, and based on determining that the target device is the device providing the information related to the power-saving mode based on the mode information, the processor may be configured to further determine whether the target device is excluded from the devices providing the information related to the power-saving mode based on the second setting value.

The energy service apparatus may further include a service module configured to display the information related to at least one of the power-saving mode or the power consumption of the device providing the energy service on an energy service screen of the user terminal, and based on determining that the target device is the device providing the energy service while not being displayed on the energy service screen, the processor may be configured to perform an update operation for a bug fix of the service module based on the first information so as to allow the target device to be displayed on the energy service screen.

Based on determining that the target device is the device providing the energy service by cross-checking the second information received from the second server and the information of the management file stored in the third server, the processor may be configured to update the first information of the first server with the information associated with the target device stored in the management file.

The second information may include information associated with a device type, the device type may include at least one of a digital appliance, a cloud-to-cloud (C2C) device, or a short-range communication device sharing a Vender ID (VID), and the processor may be configured to determine a device type of the target device based on the second information, and determine whether the target device is the device providing the energy service by cross-checking the second information and the information of the management file stored in the third server based on the device type of the target device.

Based on the device type of the target device being the C2C device, the processor may be configured to determine whether a VID of the target device is included by cross-checking the second information and the information of the management file stored in the third server so as to determine whether the target device is the device providing the energy service.

Based on the device type of the target device being the digital appliance, the processor may be configured to determine whether a VID of the target device is included and whether the target device provides power consumption information by cross-checking the second information and the information of the management file stored in the third server so as to determine whether the target device is the device providing the energy service.

Based on the device type of the target device being the short-range communication device sharing the VID, the processor may be configured to determine whether a value corresponding to a combination of two or more of the VID, a model code, and a manufacturer code included in the second information is included in the information of the management file stored in the third server so as to determine whether the target device is the device providing the energy service.

Based on a VID of the target device being included in the second information and a third setting value being included in the information of the management file stored in the third server, the third setting value indicating whether the target device is excluded from devices providing information related to the energy service as an exception, the processor may be configured to further determine whether the target device is excluded from the devices providing the information related to the energy service based on the third setting value.

According to another aspect of the disclosure, an energy service method may include: requesting, from a first server, first information associated with a device providing an energy service from among a plurality of devices connected via a smart home network to determine whether a target device, selected through a user interface of a user terminal from the plurality of devices, provides the energy service; based on information associated with the target device not being included in the first information received from the first server, requesting second information associated with the plurality of devices connected via the smart home network from a second server; determining whether the target device is the device providing the energy service by cross-checking the second information received from the second server and information of a management file stored in a third server; and outputting a result of the determining whether the target device is the device providing the energy service on a screen of the user terminal, wherein the energy service may provide information related to at least one of a power-saving mode or power consumption of the device connected via the smart home network, and the management file may include information associated with the device that provides the energy service and that is registered by an administrator through an input interface.

The energy service method may further include: based on the information associated with the target device being included in the first information received from the first server, determining whether the target device provides information related to at least one of the power-saving mode or the power consumption based on the first information, wherein the first information may include a first setting value indicating whether the target device is a device providing information related to the power consumption, confirming the first setting value of the target device using a device identifier (device ID) of the target device included in the first information, and determining whether the target device is the device providing the information related to the power consumption based on the first setting value.

The first information may further include mode information indicating whether the target device is a device providing information related to the power-saving mode, and based on determining that the target device is the device providing the information related to the power consumption based on the first setting value, the energy service method may further include determining whether the target device is the device providing the information related to the power-saving mode based on the mode information.

The first information may include a second setting value indicating whether the target device is excluded from devices providing the information related to the power-saving mode as an exception, and based on determining that the target device is the device providing the information related to the power-saving mode based on the mode information, the energy service method may further include determining whether the target device is excluded from the devices providing the information related to the power-saving mode based on the second setting value.

The information related to at least one of the power-saving mode or the power consumption of the device providing the energy service may be displayed by a service module on an energy service screen of the user terminal, and based on determining that the target device is the device providing the energy service while not being displayed on the energy service screen, the energy service method may further include performing an update operation for a bug fix of the service module based on the first information so as to allow the target device to be displayed on the energy service screen.

based on determining that the target device is the device providing the energy service by cross-checking the second information received from the second server and the information of the management file stored in the third server, the energy service method may further include updating the first information of the first server with the information associated with the target device stored in the management file.

The second information may include information associated with a device type, the device type may include at least one of a digital appliance, a cloud-to-cloud (C2C) device, or a short-range communication device sharing a Vender ID (VID), and the energy service method may further include determining a device type of the target device based on the second information, and determining whether the target device is the device providing the energy service by cross-checking the second information and the information of the management file stored in the third server based on the device type of the target device.

Based on the device type of the target device being the C2C device, the energy service method may further include determining whether a VID of the target device is included by cross-checking the second information and the information of the management file stored in the third server so as to determine whether the target device is the device providing the energy service.

Based on the device type of the target device being the digital appliance, the energy service method may further include determining whether a VID of the target device is included and whether the target device provides power consumption information by cross-checking the second information and the information of the management file stored in the third server so as to determine whether the target device is the device providing the energy service.

Based on the device type of the target device being the short-range communication device sharing the VID, the energy service method may further include determining whether a value corresponding to a combination of two or more of the VID, a model code, and a manufacturer code included in the second information is included in the information of the management file stored in the third server so as to determine whether the target device is the device providing the energy service.

Based on a VID of the target device being included in the second information and a third setting value being included in the information of the management file stored in the third server, the third setting value indicating whether the target device is excluded from devices providing information related to the energy service as an exception, the energy service method may further include determining whether the target device is excluded from the devices providing the information related to the energy service based on the third setting value.

### [Advantageous Effects]

According to the disclosure, an energy service apparatus of a user terminal and an energy service method thereof may allow a user to easily confirm whether a device selected by the user is a device providing an energy service in order to efficiently provide the energy service.

In addition, when a device is determined as a device providing the energy service, the device may be displayed on the user terminal's screen to allow the user to confirm information related to power consumption and a power-saving mode of the corresponding device.

The effects that may achieved by the disclosure are not limited to the above-mentioned effects, and other effects not mentioned will be clearly understood by one of ordinary skill in the technical art to which the disclosure belongs from the following description.

### [Description of Drawings]

FIG. 1 is a block diagram illustrating a connection relationship between an energy service apparatus and servers according to an embodiment.
FIG. 2 illustrates an example of a user interface provided by the energy service apparatus of FIG. 1 according to an embodiment.
FIG. 3 is a flowchart illustrating operations performed between the energy service apparatus of FIG. 1 and a first server to determine whether a target device is a device providing information related to power consumption according to an embodiment..
FIG. 4 is a flowchart illustrating operations performed between the energy service apparatus of FIG. 1 and the first server to determine whether a target device is a device providing information related to a power-saving mode according to an embodiment..
FIG. 5 is a flowchart illustrating operations performed among the energy service apparatus of FIG. 1, a second server, and a third server to determine whether a target device is a device providing an energy service according to an embodiment..

### [Modes of the Invention]

Various embodiments of the disclosure and terms used herein are not intended to limit the technical features described herein to specific embodiments, and should be understood to include various modifications, equivalents, or substitutions of the corresponding embodiments.

In describing of the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

As used herein, the term "and/or" includes any and all combinations of one or more of the associated listed items.

Terms such as "portion", "module", and "member" may be embodied as hardware or software. According to embodiments, a plurality of "portions", "modules", and "members" may be implemented as a single component or a single "portion", "module", and "member" may include a plurality of components.

Terms such as "1st", "2nd", "primary", or "secondary" may be used simply to distinguish an element from other elements, without limiting the element in other aspects (e.g., importance or order).

When an element (e.g., a first element) is referred to as being "(functionally or communicatively) coupled" or "connected" to another element (e.g., a second element), the first element may be connected to the second element, directly (e.g., wired), wirelessly, or through a third element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

Hereinafter, the principles of operation and embodiments of the disclosure is described with reference to the accompanying drawings.

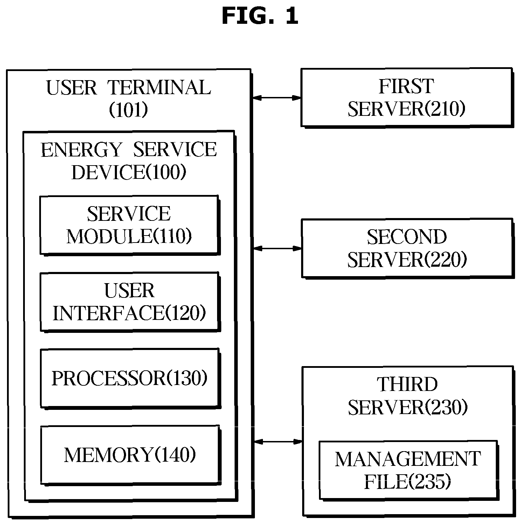

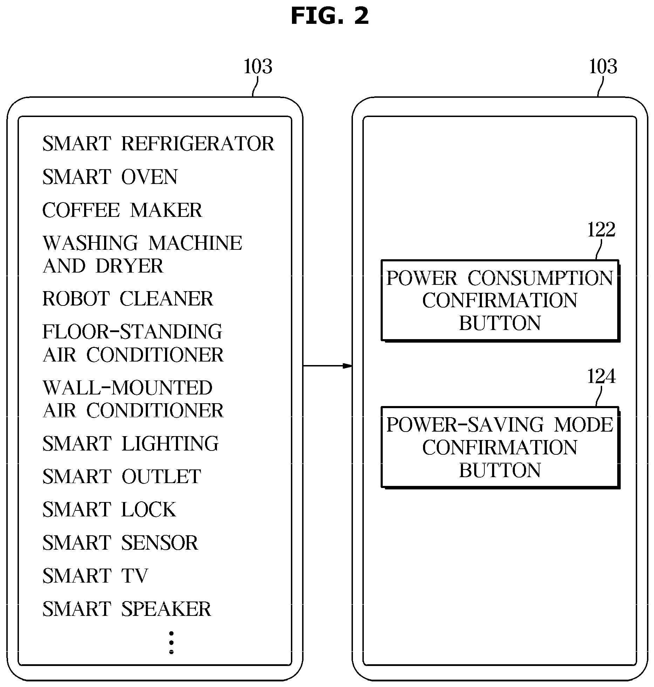

FIG. 1 is a block diagram illustrating a connection relationship between an energy service apparatus and servers according to an embodiment, and FIG. 2 illustrates an example of a user interface provided by the energy service apparatus of FIG. 1.

Referring to FIG. 1 and FIG. 2, a user may register and integratedly manage information associated with a plurality of devices connected via a smart home network through an application installed on a user terminal 101. The user terminal 101 may include, for example, a smartphone, a tablet, a laptop, a desktop computer, a wearable device, and the like.

In this instance, a second server 220 may be connected to the user terminal 101 through a user account, and may store and manage information (hereinafter, also referred to as 'second information') associated with the plurality of devices connected via the smart home network.

A first server 210 may store and manage information (hereinafter, also referred to as 'first information') associated with a device providing an energy service from among the devices stored in the second server 220. Specifically, the second server 220 may identify a device providing the energy service based on a Vender identifier (VID), device type, and the like, of the device in a registration process for the plurality of devices connected via the smart home network, and may transmit information related to the device providing the energy service to the first server 210.

The energy service provides information related to at least one of a power-saving mode or power consumption of the device to an energy service screen of the user terminal 101, thereby enabling the user to easily confirm the information related to the power-saving mode and power consumption of the device.

A third server 230 stores a management file 235 including information associated with the device providing the energy service. The management file 235 includes information about a smart device that provides the energy service and that is registered directly by an administrator through an input interface. In a case where information associated with the device providing the energy service is registered in the management file 235 but is not registered in the first information of the first server 210, device registration information of the first information of the first server 210 may be updated based on the device registration information of the management file 235.

The user terminal 101 may display a list of the plurality of devices connected via the smart home network on a management screen 103 to allow the user to confirm the devices connected via the smart home network.

For example, the plurality of devices connected via the smart home network may include a smart refrigerator, a smart oven, a coffee maker, a washing machine and a dryer, a robot cleaner, a floor-standing air conditioner, a wall-mounted air conditioner, smart lighting, a smart outlet, a smart lock, a smart sensor, a smart television (TV), a smart speaker, and the like. At least one device providing the energy service may be included in the devices connected via the smart home network.

Information related to at least one of the power-saving mode or the power consumption of the device providing the energy service from among the devices connected via the smart home network may be displayed on the energy service screen (not shown) of the user terminal 101.

Devices providing information related to power consumption in the energy service may include the smart refrigerator, the smart oven, the washing machine and the dryer, the robot cleaner, the air conditioner, and the like. For example, the smart refrigerator may monitor power consumption and report the power consumption to the user.

Devices providing information related to the power-saving mode in the energy service may include the smart refrigerator, the washing machine, the dryer, the air conditioner, and the like. For example, the smart refrigerator may provide a function of saving energy by adjusting a set temperature and a cooling method.

The user terminal 101 may include an energy service apparatus 100, and the energy service apparatus 100 may include a service module 110, a user interface 120, a processor 130, and memory 140.

For efficient energy service provision, the energy service apparatus 100 may easily determine whether a device not displayed on the energy service screen is a device providing the energy service. In addition, when a device is determined to be a device providing the energy service, the energy service apparatus 100 may display the device on the energy service screen, thereby allowing the user to confirm information related to the power-saving mode and power consumption of the corresponding device.

The service module 110 may be installed in the user terminal 101 as a plug-in. The service module 110 may display information related to at least one of the power-saving mode or the power consumption of the device providing the energy service on the energy service screen.

For example, the service module 110 may display the current power consumption of the smart refrigerator or the floor-standing air conditioner as a numeric value on the energy service screen, or may visualize and display usage trends over daily, weekly, and monthly periods in a graph or chart format.

In addition, the service module 110 may display whether the power-saving mode of the smart refrigerator or the floor-standing air conditioner is activated on the energy service screen in various forms, such as an icon. The user may activate or deactivate the power-saving mode of the floor-standing air conditioner on the energy service screen.

The user interface 120 may provide a list of the plurality of devices connected via the smart home network on the management screen 103 so that the user may select a target device to determine whether the energy service is provided.

In the embodiment of the disclosure, for convenience of description, among devices that are displayed in a device list on the management screen 103 but not displayed on the energy service screen, a device selected by the user from the device list on the management screen 103 to determine whether the device provides the energy service is defined as a target device.

The user may select at least one target device from the list of the plurality of devices displayed on the management screen 103. For example, the user may select a smart refrigerator which is previously recognized as a device that provides power consumption and the power-saving mode but is not displayed on the energy service screen.

When the user selects a target device from the device list on the management screen 103, the user interface 120 may provide a button for confirming whether the target device is a device providing the energy service. In this instance, the user interface 120 may provide a power consumption confirmation button 122 for confirming whether the device provides information related to the power consumption, and a power-saving mode confirmation button 124 for confirming whether the device provides information related to the power-saving mode on the management screen 103, respectively.

When the user presses the power consumption confirmation button 122, operations for determining whether the target device selected from the device list on the management screen 103 is a device providing information related to the power consumption may be performed.

When the user presses the power-saving mode confirmation button 124, operations for determining whether the target device selected from the device list on the management screen 103 is a device providing information about the power-saving mode may be performed.

The processor 130 may control overall operations and functions of the energy service apparatus 100, and may include a logic circuit and an arithmetic circuit as hardware. The processor 130 may control electrically connected components of the energy service apparatus 100 using a program, an instruction, and/or data stored in the memory 140 for the operation of the energy service apparatus 100. In addition, the processor 130 may include a communication module (not shown) capable of communicating with a server, a smart device, and the like.

The processor 130 may request, from the first server 210, first information associated with a device providing the energy service from among the plurality of devices connected via the smart home network to determine whether the target device, selected through the user interface 120 of the user terminal 101 from the plurality of devices, provides the energy service.

When information associated with the target device is included in the first information received from the first server 210, the processor 130 may determine whether the target device provides the energy service based on the first information.

When the information associated with the target device is included in the first information received from the first server 210 and the target device is determined to be a device providing the energy service in a state where the target device is not displayed on the energy service screen, the processor 130 may perform an update operation for a bug fix of the service module 110 based on the first information so that the target device is displayed on the energy service screen.

When the information associated with the target device is not included in the first information received from the first server 210, the processor 130 may request second information associated with the plurality of devices connected via the smart home network from the second server 220, and may cross-check the second information received from the second server 220 and information of the management file stored in the third server 230 to determine whether the target device provides the energy service.

When the target device is determined to be a device providing the energy service by cross-checking the second information received from the second server 220 and the information of the management file 235 stored in the third server 230, the processor 130 may update the first information of the first server 210 with the information associated with the target device based on the information of the management file.

The memory 140 may store a program, an application, and/or data for the operation of the energy service apparatus 100, and may store data generated by the processor. The memory may include a non-volatile memory such as a read only memory (ROM) and a flash memory for long-term data storage. The memory may include a volatile memory such as a static random access memory (S-RAM) and a dynamic random access memory (D-RAM) for temporarily storing data.

In addition, the memory 140 may store information associated with at least one of the plurality of devices connected via the smart home network or the target device providing the energy service.

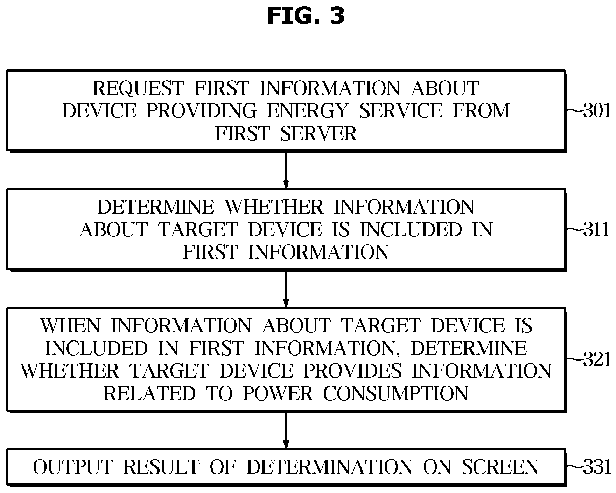

FIG. 3 is a flowchart illustrating operations performed between the energy service apparatus of FIG. 1 and the first server to determine whether a target device is a device providing information related to power consumption.

Referring to FIG. 3, when a user presses the power consumption confirmation button 122, the processor 130 requests, from the first server 210, first information associated with a device providing the energy service from among a plurality of devices connected via the smart home network to determine whether a target device, selected by the user from the plurality of devices connected via the smart home network, provides information related to power consumption (301). For example, after accessing the first server 210 through a user account, the processor 130 may request the first information associated with the device providing the energy service.

As described above, the second server 220 may identify the device providing the energy service based on a VID, device type, and the like, of the device in a registration process for the plurality of devices connected via the smart home network, and may transmit information related to the device providing the energy service to the first server 210. The first server 210 may store and manage the information related to the device providing the energy service received from the second server 220 as the first information.

The processor 130 receives the first information from the first server 210, and determines whether information associated with the target device is included in the received first information (311).

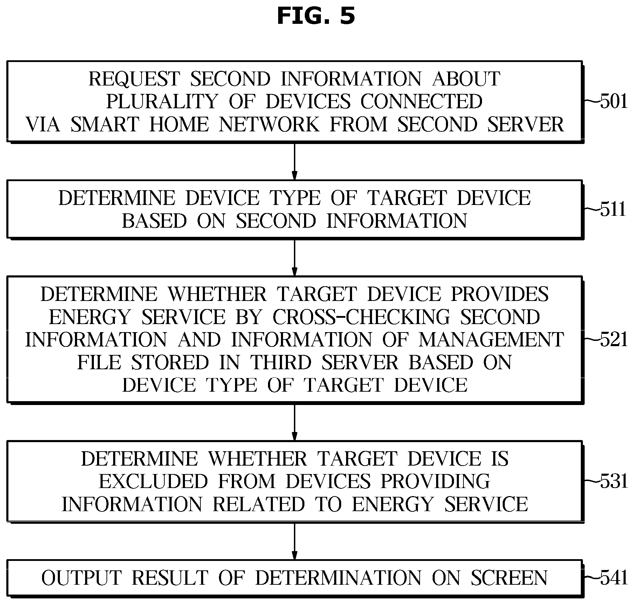

For example, the processor 130 may determine whether at least one of a device ID (Device ID), a model code, or a manufacturer code of the target device is included in the first information. When the information associated with the target device is not included in the first information received from the first server 210, operations of FIG. 5 to be described below may be performed.

When the information associated with the target device is included in the first information received from the first server 210, the processor 130 may confirm a first setting value of the target device to determine whether the target device provides the information related to power consumption (321).

The first setting value included in the first information indicates whether the device provides the information related to power consumption.

The processor 130 may confirm information related to the target device using the device ID of the target device included in the first information. For example, in a case where the first setting value of the target device is set to a value "common", the processor 130 may determine that the target device does not provide the power consumption information. In a case where the first setting value is set to a value other than "common", including a case when the first setting value of the target device is empty, the processor 130 may determine that the target device provides the power consumption.

The processor 130 outputs the result of determining whether the target device provides the power consumption on the screen (331). Based on determining that the target device provides the power consumption, the processor 130 may output a message notifying that the device provides the power consumption on the management screen 103. Based on determining that the target device does not provide the power consumption, the processor 130 may output a message notifying that the device does not provide the power consumption on the management screen 103.

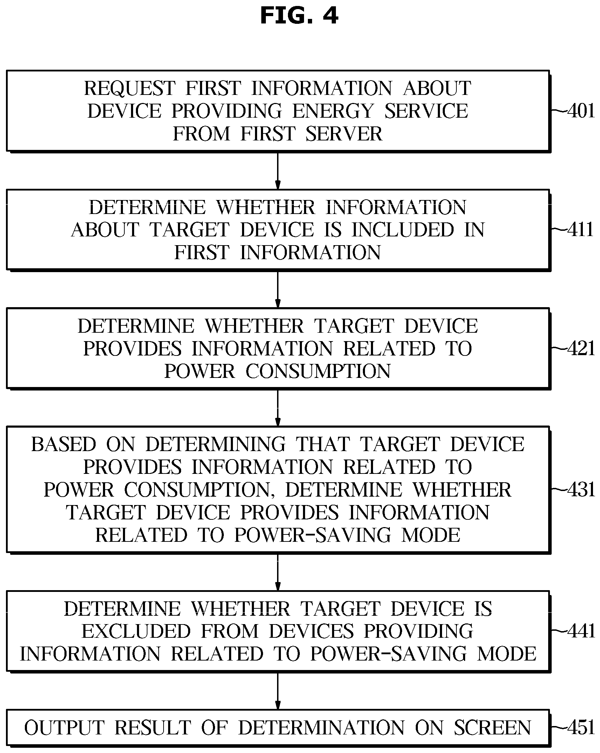

FIG. 4 is a flowchart illustrating operations performed between the energy service apparatus of FIG. 1 and the first server to determine whether a target device is a device providing information related to a power-saving mode.

Referring to FIG. 4, when the user presses the power-saving mode confirmation button 124, the processor 130 requests, from the first server 210, the first information associated with the device providing the energy service from among the plurality of devices connected via the smart home network to determine whether the target device, selected by the user from the plurality of devices connected via the smart home network, provides information related to the power-saving mode (401).

The processor 130 receives the first information from the first server 210, and determines whether information associated with the target device is included in the received first information (411).

For example, the processor 130 may determine whether the device ID of the target device is included in the first information. When the information associated with the target device is not included in the first information received from the first server 210, operations of FIG. 5 to be described below may be performed.

When the information associated with the target device is included in the first information received from the first server 210, the processor 130 confirms the first setting value of the target device to determine whether the target device provides information related to power consumption (421).

Because the above operations 401, 411, and 421 have been described with reference to FIG. 3, detailed descriptions thereof will be omitted. The processor 130 may confirm information related to the target device using the device ID of the target device included in the first information.

When the target device does not provide the information related to power consumption, the processor 130 may determine that the target device does not provide information related to the power-saving mode.

Based on determining that the target device provides information related to power consumption based on the first setting value, the processor 130 determines whether the target device provides information related to the power-saving mode based on mode information (431).

The mode information included in the first information is a value indicating whether the target device provides the information related to the power-saving mode.

For example, in a case where the mode information of the target device is set to a value "NOT SUPPORTED", the processor 130 may determine that the target device does not provide the information related to the power-saving mode. In a case where the mode information is set to a value other than "NOT SUPPORTED", including a case when the mode information is empty, the processor 130 may determine that the target device provides information related to the power-saving mode.

Based on determining that the target device provides the information related to the power-saving mode based on the mode information described above, the processor 130 may determine whether there is an exception.

To this end, the processor 130 may confirm a second setting value indicating whether the target device is excluded from the devices providing the information related to the power-saving mode as an exception, and may determine whether the target device is excluded from the devices providing the information related to the power-saving mode based on the second setting value (441).

For example, in a case of a floor-standing air conditioner and a wall-mounted air conditioner, both the floor-standing air conditioner and the wall-mounted air conditioner may be operated in the power-saving mode. In this case, when the wall-mounted air conditioner is grouped with the floor-standing air conditioner, the floor-standing air conditioner may be classified as a device providing the power-saving mode, and the wall-mounted air conditioner may be excluded from the devices providing information related to the power-saving mode.

Accordingly, in a case where the wall-mounted air conditioner is the target device, the second setting value is set to a value (e.g., multi room air conditioner (MRAC)) indicating that the wall-mounted air conditioner is excluded from the devices providing information related to the power-saving mode.

When the second setting value is set to "MRAC", the processor 130 may determine that the target device is excluded from the devices providing information related to the power-saving mode. In a case where the second setting value is set to a value other than "MRAC", including a case when the second setting value is empty, the processor 130 may determine that the target device provides information related to the power-saving mode.

The processor 130 may inform the user by outputting whether the target device provides information related to the power-saving mode on the screen according to the determination result (451).

Through the operations of FIG. 3 and FIG. 4, based on determining that the target device is a device providing the energy service, i.e., a device that provides information related to at least one of the power consumption or the power-saving mode, in a state where the target device is not displayed on the energy service screen, the processor 130 may perform an update operation for a bug fix of the service module 110 based on the first information of the first server 210 so that the target device is displayed on the energy service screen.

To this end, the processor 130 may transmit bug information about the service module 110 providing the energy service to the first server 210, and receive update information for the bug fix of the service module 110 from the first server 210 to perform the update operation for the service module 110.

In the above-described embodiment, it has been described that the power consumption confirmation button 122 for confirming whether the device provides information related to the power consumption and the power-saving mode confirmation button 124 for confirming whether the device provides information related to the power-saving mode are separately provided on the management screen 103. However, according to another embodiment, the two buttons may be provided as a single energy service confirmation button (not shown). In this case, when the user presses the energy service confirmation button, the operations of FIG. 3 and FIG. 4 described above may be continuously performed by the processor 130, and thus whether the target device provides the energy service may be effectively determined. In this instance, operations already performed in FIG. 3, such as an operation in which the energy service apparatus 100 requests and receives the first information from the first server 210, may be omitted from the operation of FIG. 4.

FIG. 5 is a flowchart illustrating operations performed among the energy service apparatus of FIG. 1, a second server, and a third server to determine whether a target device is a device providing an energy service.

Meanwhile, when the information associated with the target device is not included in the first information received from the first server 210 during the operations of FIG. 3 and FIG. 4 described above, the processor 130 requests second information associated with the plurality of devices connected via the smart home network from the second server 220 (501). For example, after accessing the second server 220 through the user account, the processor 130 may request the second information associated with the plurality of devices connected via the smart home network.

The processor 130 determines the device type of the target device based on the second information received from the second server 220 (511).

The second information may include information associated with a device type. The device type may include at least one of a digital appliance, a cloud-to-cloud (C2C) device, and a short-range communication (e.g., Zigbee, Bluetooth, near field communication (NFC), etc.) device sharing a VID. The C2C device may operate across different cloud environments via data exchange between clouds. The C2C device may include, for example, various security-related devices. Short-range communication devices sharing the VID may communicate with each other via a hub and may be controlled by the hub, and may include, for example, smart lighting, a smart outlet, a smart lock, and the like.

Thereafter, based on the device type of the target device, the processor 130 may cross-check the second information received from the second server 220 and the information of the management file 235 stored in the third server 230 to determine whether the target device provides the energy service (521).

To this end, the processor 130 may access the third server 230 to confirm the information of the management file 235, and cross-check the information of the management file 235 stored in the third server 230 and the second information received from the second server 220.

Based on determining that the target device provides the energy service by cross-checking the second information received from the second server 220 and the information of the management file 235 stored in the third server 230, the processor 130 may update the first information of the first server 210 with the information associated with the target device stored in the management file 235.

Specifically, in a case where the device type of the target device is a C2C device, the processor 130 may determine whether the VID of the target device is included by cross-checking the second information received from the second server 220 and the information of the management file 235 stored in the third server 230 so as to determine whether the target device provides the energy service. When the device type is a C2C device, whether the device provides the energy service may be determined only by whether the VID is included. When the VID of the target device is included in both the second information and the management file 235 stored in the third server 230, the processor 130 may determine that the target device provides the energy service. In addition, when the target device is determined to be a device providing the energy service as described above, the processor 130 may update the first information of the first server 210 with the information associated with the target device stored in the management file 235. In a case where the VID of the target device is included in the second information but is not included in the management file 235, the processor 130 may determine that the target device does not provide the energy service.

In a case where the device type of the target device is a digital appliance, the processor 130 may determine whether the VID of the target device is included and whether the target device provides power consumption information by cross-checking the second information received from the second server 220 and the information of the management file 235 stored in the third server 230 so as to determine whether the target device provides the energy service.

When the VID of the target device and information indicating that the target device provides the power consumption information are confirmed in both the second information and the management file 235 stored in the third server 230, the processor 130 may determine that the target device provides the energy service.

In a case where the device type of the target device is a short-range communication (e.g., Zigbee) device sharing a VID, the processor 130 may determine whether a value corresponding to a combination of two or more of the VID, a model code, and a manufacturer code included in the second information is included in the information of the management file stored in the third server so as to determine whether the target device provides the energy service.

In the case where the target device is a short-range communication device sharing the VID, a value obtained by combining two or more of the VID, the model code, and the manufacturer code included in the second information may be stored in advance in the information of the management file stored in the third server 230.

In the case where the target device is a short-range communication device sharing the VID, whether the target device provides the energy service may not be easily determined only with the VID. Accordingly, when a value corresponding to the combination of the codes described above is included in the information of the management file 235 stored in the third server 230, the processor 130 may determine that the target device provides the energy service.

Thereafter, the processor 130 determines whether the target device is excluded from the devices providing information related to the energy service as an exception (531). To this end, the processor 130 may confirm a third setting value included in the management file 235, and may determine whether the target device is excluded from the devices providing information related to the energy service as an exception.

Specifically, in a case where the VID of the target device is included in the second information of the second server 220 and a value indicating that the target device is excluded from the devices providing information related to the energy service is set in the third setting value of the management file 235, the processor 130 may determine that the target device does not provide the energy service, even when all other conditions are satisfied. For example, in the case of TV models sharing a VID, although power consumption is indicated in a device profile of the management file 235, the indicated value may not be an actual power consumption of the TV (target device). In this case, a value indicating that the indicated value is not valid may be set in the third setting value. In this instance, the processor 130 may confirm the third setting value and determine that the target device does not provide the energy service.

The method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)) or distributed (e.g., downloadable or uploadable) online through an application store (e.g., PLAYSTORE^{™}) or directly between two user devices (e.g., smartphones). When distributed online, at least a portion of the computer program product (e.g., a downloadable application) may be temporarily generated or at least temporarily stored in the machine-readable storage medium, such as a memory of the manufacturer's server, an application store server, or a relay server.

Although the embodiments of the disclosure have been provided for illustrative purposes, the scope of the disclosure is limited to the embodiments of the disclosure. One or more embodiments that may be modified and altered by those skilled in the art without departing from the principles and spirit of the disclosure, the scope of which is defined in the claims, should be construed as falling within the scope of the disclosure.

## Claims

1. An energy service apparatus, comprising:
a processor configured to:
request, from a first server, first information associated with a device providing an energy service from among a plurality of devices connected via a smart home network to determine whether a target device, selected through a user interface of a user terminal from the plurality of devices, provides the energy service,
based on information associated with the target device not being included in the first information received from the first server, request second information associated with the plurality of devices connected via the smart home network from a second server, and
determine whether the target device is the device providing the energy service by cross-checking the second information received from the second server and information of a management file stored in a third server; and
a memory configured to store at least one of the information associated with the plurality of devices connected via the smart home network and the device providing the energy service,
wherein the energy service provides information related to at least one of a power-saving mode or power consumption of the device connected via the smart home network, and
the management file includes information associated with the device that provides the energy service and that is registered by an administrator through an input interface.

2. The energy service apparatus of claim 1, wherein, based on the information associated with the target device being included in the first information received from the first server, the processor is configured to determine whether the target device provides information related to at least one of the power-saving mode or the power consumption based on the first information,
the first information includes a first setting value indicating whether the target device is a device providing information related to the power consumption, and
the processor is configured to confirm the first setting value of the target device using a device identifier (device ID) of the target device included in the first information, and determine whether the target device is the device providing the information related to the power consumption based on the first setting value.

3. The energy service apparatus of claim 2, wherein the first information further includes mode information indicating whether the target device is a device providing information related to the power-saving mode, and
based on determining that the target device is the device providing the information related to the power consumption based on the first setting value, the processor is configured to determine whether the target device is the device providing the information related to the power-saving mode based on the mode information.

4. The energy service apparatus of claim 3, wherein the first information includes a second setting value indicating verification of a device that is excluded from devices providing the information related to the power-saving mode as an exception, and
based on determining that the target device is the device providing the information related to the power-saving mode based on the mode information, the processor is configured to further determine whether the target device is excluded from the devices providing the information related to the power-saving mode based on the second setting value.

5. The energy service apparatus of claim 4, further comprising:
a service module configured to display the information related to at least one of the power-saving mode or the power consumption of the device providing the energy service on an energy service screen of the user terminal, and
wherein, based on determining that the target device is the device providing the energy service while not being displayed on the energy service screen, the processor is configured to perform an update operation for a bug fix of the service module based on the first information so as to allow the target device to be displayed on the energy service screen.

6. The energy service apparatus of claim 1, wherein, based on determining that the target device is the device providing the energy service by cross-checking the second information received from the second server and the information of the management file stored in the third server,
the processor is configured to update the first information of the first server with the information associated with the target device stored in the management file.

7. The energy service apparatus of claim 1, wherein the second information includes information associated with a device type,
the device type includes at least one of a digital appliance, a cloud-to-cloud (C2C) device, or a short-range communication device sharing a Vender identifier (VID), and
the processor is configured to determine a device type of the target device based on the second information, and determine whether the target device is the device providing the energy service by cross-checking the second information and the information of the management file stored in the third server based on the device type of the target device.

8. The energy service apparatus of claim 7, wherein, based on the device type of the target device being the C2C device,
the processor is configured to determine whether a VID of the target device is included by cross-checking the second information and the information of the management file stored in the third server so as to determine whether the target device is the device providing the energy service.

9. The energy service apparatus of claim 7, wherein, based on the device type of the target device being the digital appliance,
the processor is configured to determine whether a VID of the target device is included and whether the target device provides power consumption information by cross-checking the second information and the information of the management file stored in the third server so as to determine whether the target device is the device providing the energy service.

10. The energy service apparatus of claim 7, wherein, based on the device type of the target device being the short-range communication device sharing the VID,
the processor is configured to determine whether a value corresponding to a combination of two or more of the VID, a model code, and a manufacturer code included in the second information is included in the information of the management file stored in the third server so as to determine whether the target device is the device providing the energy service.

11. The energy service apparatus of claim 7, wherein, based on a VID of the target device being included in the second information and a third setting value being included in the information of the management file stored in the third server, the third setting value indicating whether the target device is excluded from devices providing information related to the energy service as an exception,
the processor is configured to further determine whether the target device is excluded from the devices providing the information related to the energy service based on the third setting value.

12. An energy service method, comprising:
requesting, from a first server, first information associated with a device providing an energy service from among a plurality of devices connected via a smart home network to determine whether a target device, selected through a user interface of a user terminal from the plurality of devices, provides the energy service;
in response to information about the target device not being included in the first information received from the first server, requesting second information associated with the plurality of devices connected via the smart home network from a second server;
determining whether the target device is the device providing the energy service by cross-checking the second information received from the second server and information of a management file stored in a third server; and
outputting a result of the determining whether the target device is the device providing the energy service on a screen of the user terminal,
wherein the energy service provides information related to at least one of a power-saving mode or power consumption of the device connected via the smart home network, and
the management file includes information associated with the device that provides the energy service and that is registered by an administrator through an input interface.

13. The energy service method of claim 12, further comprising:
based on the information associated with the target device being included in the first information received from the first server, determining whether the target device provides information related to at least one of the power-saving mode or the power consumption based on the first information,
wherein the first information includes a first setting value indicating whether the target device is a device providing information related to the power consumption,
confirming the first setting value of the target device using a device identifier (device ID) of the target device included in the first information, and
determining whether the target device is the device providing the information related to the power consumption based on the first setting value.

14. The energy service method of claim 12, further comprising:
based on determining that the target device is the device providing the energy service by cross-checking the second information received from the second server and the information of the management file stored in the third server,
updating the first information of the first server with the information associated with the target device stored in the management file.

15. The energy service method of claim 12, wherein:
the second information includes information associated with a device type,
the device type includes at least one of a digital appliance, a cloud-to-cloud (C2C) device, or a short-range communication device sharing a Vender identifier (VID), and
the energy service method further comprises:
determining a device type of the target device based on the second information; and
determining whether the target device is the device providing the energy service by cross-checking the second information and the information of the management file stored in the third server based on the device type of the target device.
